# EUROPÄISCHE PATENTANMELDUNG

(11) **EP 0 977 425 A1**
(43) Veröffentlichungstag der Anmeldung: **02.02.2000**
(21) Anmeldenummer: 99114965.9
(22) Anmeldetag: 30.07.1999
(51) Int. Cl.: H04N 3/08, H04N 5/225

(54) **Vorrichtung und Verfahren zur Farbaufnahme eines Panoramabildes**

(30) Priorität: 31.07.1998 DE 19834597
(71) Anmelder: Gerhard Bonnet, 67663 Kaiserslautern (DE); Stefan Steuerwald, 67663 Kaiserslautern (DE)
(72) Erfinder: Gerhard Bonnet, 67663 Kaiserslautern (DE); Stefan Steuerwald, 67663 Kaiserslautern (DE)
(74) Vertreter: Wieske, Thilo

(57) **Zusammenfassung**

Die Erfindung betrifft eine Vorrichtung zur Farbaufnahme eines Bildes, bei der zur Aufnahme des Bildes ein Sensor vorgesehen ist, der um wenigstens eine Achse drehbar ist und der eine Fläche von Pixeln aufweist, wobei die Farbaufnahme realisierbar ist, indem Pixel eine unterschiedliche spektrale Empfindlichkeit (RGB) aufweisen, wobei benachbarte Pixel in einer Drehrichtung eine unterschiedliche spektrale Empfindlichkeit aufweisen und wobei der Sensor zwischen zwei einander zugeordneten Einzelaufnahmen um solche Winkel verdrehbar ist, die dem Abstand benachbarter Pixel (RGB) mit unterschiedlicher spektraler Empfindlichkeit entsprechen. Ebenso betrifft die Erfindung ein Verfahren zur Aufnahme eines Bildes mit der Vorrichtung.

## Beschreibung

Die Erfindung betrifft eine Vorrichtung zur Farbaufnahme eines Bildes nach Patentanspruch 1 sowie ein Verfahren zur Farbaufnahme eines Bildes nach Patentanspruch 4.

Es ist bereits eine sogenannte Panoramakamera für Farbaufnahmen bekannt, die in einem Aufsatz von Michael Sinclair mit Datum 30.07.1997 im Internet veröffentlicht wurde unter der Website "http://www.oip.gatech.edu/mike/html/pancamsketch.html" sowie "http://www.oip.gatech.edu/mike/html/scancam2_0.html". Diese Kamera besteht aus einem Farbsensor, der einen bestimmten Raumwinkel erfaßt. Indem der Farbsensor so gedreht wird, daß nacheinander verschiedene benachbarte Raumwinkel erfaßt werden, kann durch Zusammensetzen der Bilder der einzelnen Raumwinkel das Panoramabild erzeugt werden. Es werden dabei immer die Farbinformationen dreier Pixel, die eine unterschiedliche spektrale Empfindlichkeit aufweisen (rot, grün und blau) zu einem Bildpunkt zusammengefaßt, so daß punktweise ein farbiges Bild entsteht.

Ein derartiger Farbsensor ist beispielsweise erhältlich von der Firma Sony unter der Produktbezeichnung "ILX724K" (Trilinearsensor TLS). Dieser Farbsensor weist 3 Reihen von Pixeln auf. In jeder dieser Reihe sind 2.700 Pixel angeordnet. Die Pixel jeder Reihe weisen dieselbe spektrale Empfindlichkeit auf, wobei die spektrale Empfindlichkeit der Pixel reihenweise unterschiedlich ist. Jede der drei Reihen besitzt eine spezifische spektrale Empfindlichkeit entsprechend den Grundfarben Rot, Grün und Blau. Der Reihenabstand ist deutlich größer als die Größe eines Pixels (etwa das Zehnfache eines Pixels).

Weiterhin ist ein Farbsensor zur Verwendung in einer Panoramakamera bekannt (EP 0 800 308 A2), bei dem die Pixel in einer oder in mehreren Reihen angeordnet sind, wobei die in einer Reihe nebeneinander liegenden Pixel eine unterschiedliche spektrale Empfindlichkeit (RGB) aufweisen. Die in einer Reihe nebeneinander liegenden Pixel weisen eine systematische Wiederkehr der einzelnen Farben Rot, Grün und Blau auf.

Bei dem aus dem Stand der Technik bekannten Trilinearsensor der Firma Sony unter der Produktbezeichnung "ILX724K" zeigt sich, daß die Reihen einen vergleichsweise großen Abstand aufweisen müssen, um insbesondere für die mittlere Reihe hinreichend Platz zu haben, um die Pixel dieser Reihe auswerten zu können. Bei den beiden äußeren Reihen können benötigte Bauteile und Baugruppen nach außen hin angebracht werden. Wegen des dreireihigen Aufbaus des vorbekannten Sensors der Firma Sony unter der Produktbezeichnung "ILX724K" bedingen diese Bauteile und Baugruppen, die für die mittlere Reihe benötigt werden, einen Mindestabstand zwischen den Reihen. Dadurch liegen bei dem vorbekannten Sensor der Firma Sony unter der Produktbezeichnung "ILX724K" die Pixel einer Reihe des Sensors um ca. den Faktor 10 dichter nebeneinander als die Reihen dieses Sensors. Indem also bei dem Farbsensor der EP 0 800 308 A2 die drei zusammengehörenden Pixel, aus denen die Farbinformationen eines Bildpunktes gewonnen werden, in einer Reihe hintereinander in einer Linie liegen, wird der Winkelfehler senkrecht zu dieser Linie vollständig eliminiert (dies entspricht der zum Winkel ϕ gehörenden Richtung). In der Richtung dieser Linie wird der Winkelfehler wesentlich verkleinert, da die Pixel in der Reihe wesentlich dichter nebeneinander liegen als die Reihen. Indem also der Sensor eine oder mehrere Reihen von Pixeln aufweist und nebeneinander liegende Pixel einer Reihe unterschiedliche spektrale Empfindlichkeit aufweisen, verringert sich der Winkelfehler beim Zusammensetzen der Farbinformation eines Bildpunktes aus den Farbinformationen dreier Pixel. Dadurch reduziert sich vorteilhaft der Farbfehler bei der Aufnahme.

Ein solcher Sensor kann aus mehreren Pixelreihen bestehen. Der Sensor kann um solche Winkel verdrehbar sein, die kleiner sind als dies den Abständen der Pixelreihen entspricht.

Bei dem Sensor sind die Pixelreihen vertikal ausgerichtet. Durch die Drehung des Sensors um entsprechend kleine Winkel kann eine hinreichende Dichte von Bildpunkten in horizontaler Richtung erreicht werden. Insbesondere bei einem Sensor, der aus mehr als zwei Reihen von Pixeln gebildet wird und bei dem aus den bereits angeführten Gründen zwischen den Reihen ein vergleichsweise großer Abstand besteht, kann mit dieser Winkelverstellbarkeit des Sensors eine hinreichende Dichte von Bildpunkten in horizontaler Richtung erreicht werden.

Weiterhin wurde im Internet (http://www.innotech-ht.com/sasmetri.htm) eine Panoramakamera veröffentlicht, mittels der Schwarz-Weiß - Aufnahmen erstellbar sind. Systembedingt stellt sich hier die Frage der Zusammensetzung der Bildinformation eines Bildpunktes aus Farbinformationen mehrerer Pixel mit unterschiedlicher spektraler Empfindlichkeit nicht.

Die Funktionsweise der Farbbildpanoramakamera stellt sich also derart dar, daß das Panorama als Menge aller Bildpunkte betrachtet wird, die ein Beobachter ausgehend von einem festen Ursprung in verschiedene Raumrichtungen wahrnimmt. Die Raumrichtungen werden durch den horizontalen Winkel ϕ um die vertikale Achse und den Winkel Θ bezogen auf die horizontale Achse definiert. Jedem Bildpunkt wird eine in die Grundfarben Rot, Grün und Blau (RGB) zerlegbare Farbinformation zugeordnet. Das Panorama läßt sich also als die zwei Winkeln ϕ und Θ zugeordnete Farbinformation darstellen: RGB(ϕ,Θ).

Demgegenüber ist es die Aufgabe der vorliegenden Erfindung, die Farbaufnahme eines Bildes zu verbessern.

Diese Aufgabe wird erfindungsgemäß gelöst durch ein Verfahren nach Anspruch 1, wonach benachbarte Pixel in einer Drehrichtung eine unterschiedliche spektrale Empfindlichkeit aufweisen. Weiterhin ist der Sensor zwischen zwei einander zugeordneten Einzelaufnahmen um einen solchen Winkel verdrehbar, der dem Abstand benachbarter Pixel mit unterschiedlicher spektraler Empfindlichkeit entspricht.

Mit einer solchen Vorrichtung kann die Farbinformation eines Bildpunktes gewonnen werden, indem nacheinander Pixel mit unterschiedlicher spektraler Empfindlichkeit an den entsprechenden Ort gebracht werden und indem die Farbinformation eines Bildpunktes aus den Farbinformationen zusammengesetzt wird, die den einzelnen Pixeln entsprachen, als diese sich an dem jeweiligen Ort befanden.

Vorteilhaft sind die Pixel mit unterschiedlicher spektraler Empfindlichkeit unmittelbar benachbart, weil dann die Verstellung des Sensors am einfachsten ist. Dies ist aber nicht zwingend erforderlich.

Bei der Vorrichtung nach Anspruch 2 liegen die Pixel in einer Orientierung der Fläche dichter nebeneinander als in einer anderen Orientierung der Fläche. Die in der anderen Orientierung der Fläche weniger dicht nebeneinander liegenden Pixel weisen eine unterschiedliche spektrale Empfindlichkeit (RGB) auf.

Bei der Ausgestaltung der Vorrichtung nach Anspruch 2 zeigt sich, daß der bekannte Sensor verwendet werden kann, wenn dieser mit einer Verstellmöglichkeit nach Anspruch 1 versehen ist. Die Pixel der einzelnen Farbreihen des Sensors können dann wiederum dieselbe spektrale Empfindlichkeit aufweisen, was unter Umständen Fertigungsvorteile mit sich bringt.

Bei der Vorrichtung nach Anspruch 3 ist der Sensor zwischen zwei einander zugeordneten Einzelaufnahmen um Winkel verdrehbar, die kleiner sind als der Winkel, der dem Abstand benachbarter Pixel mit unterschiedlicher spektraler Empfindlichkeit entspricht.

Vorteilhaft zeigt sich bei dieser Ausgestaltung der Vorrichtung nach Anspruch 3, daß in horizontaler Richtung eine bessere Bildpunktdichte erreichbar wird. Indem der Sensor um kleinere Winkel verdreht wird, als der Winkel, der dem Abstand benachbarter Pixel mit unterschiedlicher spektraler Empfindlichkeit entspricht, wird die Bildpunktdichte erhöht. Diese kleineren Winkel können beispielsweise die Hälfte, ein Drittel, ein Viertel oder einen anderen ganzzahligen Teil des Winkels betragen, der dem Abstand benachbarter Pixel entspricht. Das Zusammensetzen der Farbinformationen der benachbarten Pixel geschieht dann entsprechend anders. Wenn die Reihenfolge der Pixel mit unterschiedlicher spektraler Empfindlichkeit in Drehrichtung beispielsweise Rot, Grün und Blau beträgt und der Drehwinkel ein Drittel des Winkels, der dem Abstand der benachbarten Pixel mit unterschiedlicher spektraler Empfindlichkeit entspricht, wird die Farbinformation des Pixels mit der spektralen Empfindlichkeit im roten Bereich aus der ersten Einzelaufnahme mit der Farbinformation des Pixels mit der spektralen Empfindlichkeit im grünen Bereich aus der vierten Einzelaufnahme sowie mit der Farbinformation des Pixels mit der spektralen Empfindlichkeit im blauen Bereich aus der siebten Einzelaufnahme zu der Bildinformation eines Bildpunktes zusammengefaßt.

Weiterhin wird diese Aufgabe erfindungsgemäß gelöst durch ein Verfahren nach Anspruch 4, wonach die in Drehrichtung des Sensors nebeneinander liegenden Pixel eine unterschiedliche spektrale Empfindlichkeit (RGB) aufweisen und wonach die Aufnahme eines Bildpunktes des Bildes erfolgt, indem die Farbinformation dieses Bildpunktes aus den nacheinander aufgenommenen Farbinformationen von Pixeln unterschiedlicher spektraler Empfindlichkeit zusammengesetzt wird, indem zwischen zwei einander zugeordneten Einzelaufnahmen der Sensor um einen dem Abstand zwischen zwei benachbarten Pixeln unterschiedlicher spektraler Empfindlichkeit entsprechenden Betrag weitergedreht wird, wobei aus den nacheinander aufgenommenen Farbinformationen benachbarter Pixel mit spektral unterschiedlicher Empfindlichkeit die jeweils einem Bildpunkt entsprechende Bildinformation gewonnen wird.

Indem die Bildinformationen der einzelnen Bildpunkte aus Pixeln mit spektral unterschiedlicher Empfindlichkeit zusammengesetzt werden, die sich nacheinander an dem Ort befanden, der dem jeweiligen Bildpunkt zugeordnet ist, ist der Winkelfehler bei der Überlagerung der Farbinformationen nur noch durch eventuelle mechanische Ungenauigkeiten bei der Winkelverstellung gegeben. Es zeigt sich, daß sich mit diesem Verfahren eine Farb-Panoramaaufnahme vornehmen läßt, die praktisch keinen Farbfehler mehr aufweist.

Bei dem Verfahren nach Anspruch 5 besteht der Sensor aus drei Reihen von Pixeln, wobei die Pixel in einer Reihe dieselbe spektrale Empfindlichkeit aufweisen, wobei die Pixel benachbarter Reihen jeweils eine unterschiedliche spektrale Empfindlichkeit aufweisen.

Vorteilhaft zeigt sich hierbei, daß der bereits aus dem Stand der Technik bekannte und auch käuflich erhältliche Sensor verwendet werden kann.

Bei dem Verfahren nach Anspruch 6 wird der Sensor zwischen zwei einander zugeordneten Einzelaufnahmen um solche Winkel verdreht, die kleiner sind als dies dem Abstand benachbarter Pixel mit unterschiedlicher spektraler Empfindlichkeit entspricht.

Dadurch läßt sich vorteilhaft die Bildpunktdichte in horizontaler Richtung erhöhen. Die Zusammenfassung der Farbinformationen der Pixel mit unterschiedlicher spektraler Empfindlichkeit muß entsprechend angepaßt werden, wie dies im Zusammenhang mit Anspruch 3 bereits erläutert wurde.

Bei dem Verfahren nach Anspruch 7 wird mittels benachbarter Aufnahmevorrichtungen, die durch eine Antriebseinheit angetrieben werden, jeweils ein Panoramabild erzeugt, wobei für eine dreidimensionale Reproduktion des Panoramabildes diese Panoramabilder einer Wiedergabevorrichtung zugeführt werden.

Dadurch kann vorteilhaft ein Panorama dreidimensional dargestellt werden.

Da der Verstellwinkel der Aufnahmevorrichtung nicht begrenzt ist, lassen sich mit der erfindungsgemäßen Vorrichtung und dem erfindungsgemäßen Verfahren Bilder mit großem Öffnungswinkel aufnehmen, wie Panoramabilder. Diese Panoramabilder können auch mit einem Winkel von 3 60 Grad aufgenommen werden.

Ein Ausführungsbeispiel der Erfindung ist in der Zeichnung näher dargestellt. Es zeigt dabei im einzelnen:
- Fig. 1:: die Darstellung eines Panoramas mit einer Aufnahmevorrichtung,
- Fig. 2:: die Prinzipdarstellung eines Farbsensors,
- Fig. 3:: die Draufsicht auf einen bekannten Sensor mit der erfindungsgemäßen Aufnahmetechnik,
- Fig. 4:: ein Blockschaltbild zur Darstellung eines Verfahrens zur Aufnahme und Auswertung mit einer erfindungsgemäßen Vorrichtung.

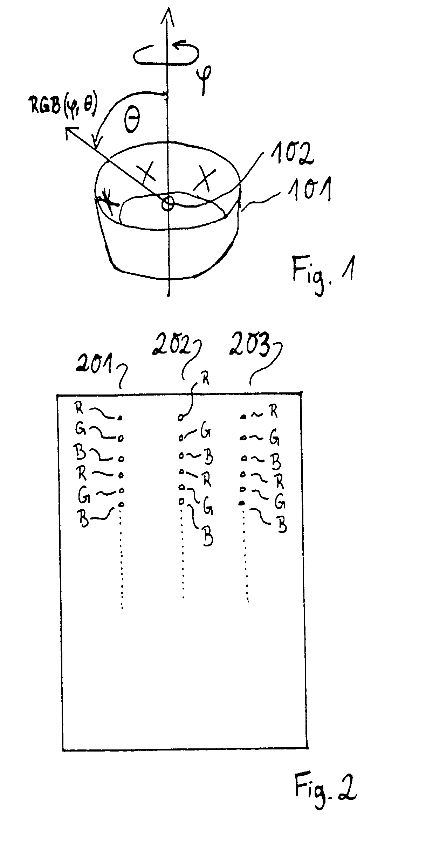

Figur 1 zeigt die Prinzipdarstellung eines Panoramas 101 mit einer Aufnahmevorrichtung 102. Dabei ist die Orientierung der Winkel ϕ und Θ zu sehen. Weiterhin ist dargestellt, daß zu einem Bildpunkt eine aus den drei Grundfarben (RGB) zusammengesetzte Bildinformation gehört. Diese Bildinformation wird also den Winkeln ϕ und Θ zugeordnet.

Gemäß der Darstellung der Figur 1 fallen die Drehachse der Aufnahmevorrichtung 102 wie auch das Symmetriezentrum der optischen Abbildung zusammen. Dieser Aufbau vereinfacht die Weiterverarbeitung der Bildinformationen zu einem Panoramabild erheblich, ist aber nicht zwingend erforderlich. Der Sensor befindet sich vorteilhaft in der Abbildungsebene des optischen Systems. Durch die gleichzeitige Rotation des Sensors und des optischen Abbildungssystems wird das Panorama sequentiell und spaltenweise abgetastet.

Das Panorama ist als "Band" 101 dargestellt, um aufzuzeigen, daß mit dem Sensor ein bestimmter Öffnungswinkel in vertikaler Richtung erfaßt werden kann. Das Bild des Panoramas ist durch die Buchstaben "X" angedeutet. Die Aufnahmevorrichtung 102 rotiert um die vertikale Achse, so daß das vollständige Panorama aus den Einzelaufnahmen zusammengesetzt werden kann.

Figur 2 zeigt die Darstellung eines Farbsensors, der anstelle des aus dem Stand der Technik bekannten und in der Beschreibungseinleitung erwähnten Trilinearsensors der Firma Sony unter der Produktbezeichnung "ILX724K" verwendet werden kann. Dabei ist zu sehen, daß der in Figur 2 dargestellte Trilinearsensor drei Reihen 201, 202 und 203 von Pixeln aufweist, wobei die Pixel der einzelnen Reihen 201, 202 und 203 jeweils nacheinander abfolgend die spektrale Empfindlichkeit in den Farben rot, grün und blau aufweisen. Da die Pixel in den einzelnen Reihen dichter nebeneinander liegen als die Reihen 201, 202 und 203, reduziert sich der Farbfehler bei einer Aufnahme mit der gezeigten Vorrichtung gegenüber der bekannten Vorrichtung mit dem bekannten Aufnahmeverfahren. Die Vorrichtung wird dabei wie beim Stand der Technik so eingesetzt, daß sich die Reihen 201, 202 und 203 der Pixel in vertikaler Richtung erstrecken.

Als Variation des Ausführungsbeispiels der Figur 2 ist es auch möglich, anstelle der drei Reihen eine andere Zahl von Reihen vorzusehen. Insbesondere ist es auch möglich, einen Sensor vorzusehen, der lediglich eine Pixelreihe aufweist. Die Zahl der Pixelreihen hängt mit der Aufnahmegeschwindigkeit zusammen, daß die Zahl der Pixelreihen die mit einer einzelnen Aufnahme erfaßbaren Bildpunkte beeinflußt. Es ist möglich, den Sensor zwischen den einzelnen Aufnahmen um Winkel zu verdrehen, die kleiner sind als der Winkel, der dem Abstand zweier Reihen entspricht. Dadurch läßt sich die Bildpunktdichte in horizontaler Richtung erhöhen.

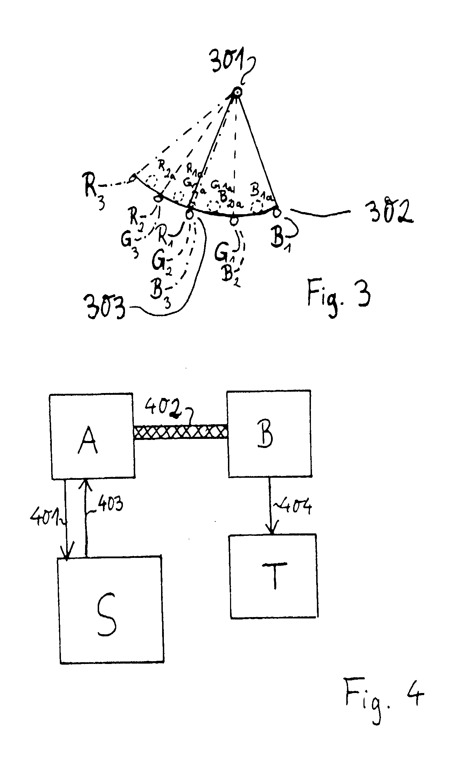

Figur 3 zeigt einen bekannten Sensor, der aus drei Reihen von Pixeln besteht, wobei die Pixel jeder Reihe dieselbe spektrale Empfindlichkeit aufweisen und wobei die spektralen Empfindlichkeiten der drei Reihen unterschiedlich sind (RGB). Bei einer Aufnahme eines Panoramas nach Figur 1 entspricht das in Figur 3 gezeigte Drehzentrum 301 der Aufnahmevorrichtung 102. Es ist die Aufnahmefläche 302 des Sensors gezeigt. Im Drehzentrum befindet sich weiterhin die Abbildungsoptik; die Aufnahmefläche 302 befindet sich in der Abbildungsebene der Abbildungsoptik.

Figur 3 ist weiterhin zu entnehmen, daß die Aufnahmefläche des Sensors 302 gedreht wird. Eine erste Stellung ist mit durchgezogenen Linien markiert. Diese beinhaltet drei Reihen von Pixeln mit der spektralen Empfindlichkeit rot, grün und blau (R1, G1, B1). Die zweite Stellung ist mit gestrichelten Linien dargestellt. Es ist zu sehen, daß die Pixelreihe mit der spektralen Empfindlichkeit im blauen Bereich in der zweiten Stellung (B2) an dem Ort ist, an dem sich in der ersten Stellung die Pixelreihe mit der spektralen Empfindlichkeit im grünen Bereich (G1) befand. Die Pixelreihe mit der spektralen Empfindlichkeit im grünen Bereich befindet sich in der zweiten Stellung (G2) an dem Ort (303), an dem sich in der ersten Stellung die Pixelreihe mit der spektralen Empfindlichkeit im roten Bereich (R1) befand. Die Pixelreihe mit der spektralen Empfindlichkeit im roten Bereich ist in der zweiten Stellung (R2) "eine Position weitergedreht". Die dritte Stellung ist mit strichpunktierten Linien markiert. Die Pixelreihe mit der spektralen Empfindlichkeit im blauen Bereich befindet sich jetzt (B3) an dem Ort (303), an dem sich in der ersten Stellung die Pixelreihe mit der spektralen Empfindlichkeit im roten Bereich (R1) befand. Die Pixelreihe mit der spektralen Empfindlichkeit im grünen Bereich befindet jetzt (G3) sich an der Stelle, an der sich in der zweiten Stellung die Pixelreihe mit der spektralen Empfindlichkeit im roten Bereich (R2) befand. Die Pixelreihe mit der spektralen Empfindlichkeit im roten Bereich ist wiederum (R3) "eine Position weitergedreht".

Die Zusammensetzung der Bildinformation eines Bildpunktes läßt sich anhand des Ortes 303 erläutern. Nacheinander laufen die Pixelreihen durch. Indem die nacheinander aufgenommenen Farbinformationen der einzelnen Pixel (R1, G2, B3) benachbarter Reihen zusammengesetzt werden, ergibt sich die volle Farbinformation des Ortes 303 durch die nacheinander aufgenommenen Farbinformationen ohne Winkelfehler. Daß die Farbinformationen der zu dem Ort 303 benachbarten Orte nicht vollständig dargestellt sind, liegt daran, daß der Sensor nur in drei Stellung dargestellt wurde. Bei einem vollständigen "Rundlauf" ist es ersichtlich, daß jede der Pixelreihen an jedem Ort einmal war, so daß für jeden Ort die vollständige Farbinformation verfügbar ist.

Vorteilhaft ist es, den Sensor um wenigstens den doppelten Betrag des Winkels, der dem Abstand benachbarter Pixel mit unterschiedlicher spektraler Empfindlichkeit entspricht, weiter zu drehen als exakt um 360 Grad, um für jeden Ort kurzzeitig nacheinander aufgenomme Farbinformationen zusammensetzen zu können. Andernfalls müssen Farbinformationen, die am Beginn der Aufnahme aufgenommen wurden, mit Farbinformationen kombiniert werden, die am Ende des Umlaufes aufgenommen werden, was sich bei einer Änderung der Lichtverhältnisse als problematisch erweisen kann.

Weiterhin ist es vorteilhaft, wenn der Sensor zwischen einzelnen Aufnahmen um Winkel verdrehbar ist, die kleiner sind als der Winkel, der dem Abstand zweier benachbarter Pixel mit unterschiedlicher spektraler Empfindlichkeit entspricht. Dies ist in der Zeichnung strichliniert dargestellt als Zwischenposition R1a, G1a, B1a sowie als Zwischenposition R2a, G2a, B2a. Bei einer Durchnummerierung der Aufnahmen wird in diesem Ausführungsbeispiel die Farbinformation des Pixels mit der spektralen Empfindlichkeit im roten Bereich der ersten Aufnahme mit der Farbinformation des Pixels mit der spektralen Empfindlichkeit im grünen Bereich der dritten Aufnahme und mit der Farbinformation des Pixels mit der spektralen Empfindlichkeit im blauen Bereich der fünften Aufnahme zur Farbinformation eines Bildpunktes zusammengefaßt.

Drückt man den Winkel, um den der Sensor zwischen zwei Aufnahmen gedreht wird, als ganzzahligen Teil des Winkels aus, der dem Abstand zweier benachbarter Pixel mit unterschiedlicher spektraler Empfindlichkeit entspricht, wobei diese ganze Zahl "N" sei, so wird bei einer Anordnung der Pixel in der Reihenfolge rot, grün, blau die Farbinformation eines Bildpunktes beginnend mit der Aufnahme der Nummer "L" aus der Farbinformation des roten Pixels dieser Aufnahme R(L) mit der Farbinformation des grünen Pixels der Aufnahme R(L+N) sowie der Farbinformation des blauen Pixels der Aufnahme R(L+2*N) zusammengesetzt. Die Aufnahmen mit den Nummer "L", "L+N" sowie "L+2*N" sind einander jeweils paarweise zugeordnet und werden zusammen ausgewertet, um die Farbinformation von Bildpunkten zu erhalten.

Durch Bestimmung des Drehwinkels ϕs des Sensorkopfes kann also die Belichtung der drei RGB-Reihen des Trilinearsensors mit dem während der Belichtung von den drei Reihen überstrichenen Raumwinkel in Verbindung gebracht werden. Aus diesem bekannten Zusammenhang kann die einem Drehwinkel ϕs entsprechende Farbinformation aus den zu verschiedenen Zeiten gewonnenen Farbinformationen der drei Farbreihen zusammengesetzt werden.

Die Bestimmung des Drehwinkels kann durch verschiedene, an sich bekannte Meßverfahren erfolgen. Eine aktive Messung kann beispielsweise kapazitiv, induktiv, mittels eines Inkrementalgebers oder mittels eines absoluten Winkelgebers erfolgen.

Bei einer konstanten Winkelgeschwindigkeit des Antriebes kann der reale Drehwinkel auch auf eine Zeitmessung zurückgeführt werden. Eine Realisierungsmöglichkeit ist beispielsweise gegeben durch den Einsatz einer Schrittmotor-Getriebe-Kombination als Antrieb, verbunden mit einer Ansteuerung des Schrittmotors mit einer festen Treiberfrequenz.

Ebenso kann ein (ggf. drehzahlgeregelter) Gleichstrommotor mit einem nachfolgenden Getriebe mit einem Impulsgeber auf der Motorwelle vorgesehen sein.

Gemäß dem Blockschaltbild der Figur 4 besteht die Panoramakamera aus einer Antriebs- (A), einer Bilderfassungs- (B) und einer Steuereinheit (S) sowie einer Transfergruppe T.

Der Block der Antriebsguppe A repräsentiert in dem gezeigten Ausführungsbeispiel einen Gleichstrommotor, der über ein Getriebe eine Kombination aus einer Präzisions-Schnecke und einem Präzisions-Schneckenrad antreibt. Das Schneckenrad rotiert im vorliegenden Ausführungsbeispiel die geeignet gelagerte Bilderfassungsgruppe (B) kontinuierlich um die vertikale Achse. Der Motor besitzt einen Inkremental-Impulsgeber, der zur Ableitung der aktuellen Winkelposition ϕ der Bilderfassungsgruppe B dient. Mittels eines weiteren Sensors, beispielsweise einer Gabel-Lichtschranke, kann die Null-Position des Winkels ϕ erfaßt werden. Die Sensordaten werden über die Verbindungsleitung 401 der Steuergruppe S zugeführt. Die Ansteuersignale von der Steuergruppe S zur Antriebsgruppe A werden über die Verbindungsleitung 403 übertragen.

Über die mechanische Übertragung 402 wird die Bilderfassungsgruppe von der Antriebsgruppe A bewegt. Die Bilderfassungsgruppe kann so aufgebaut sein, daß sich in der Bildebene eines handelsüblichen Objektivs ein RGB CCD-Reihensensor befindet (Trilinearsensor), der einen vertikalen Streifen des Panoramas bildwandelt. Die entstehenden analogen Signale werden über eine Steuerlogik sequentiell aus dem Sensor ausgelesen und mit einem A/D-Wandler digitalisiert. Der einem Streifen entsprechende Datenstrom wird temporär in einem Zwischenspeicher abgelegt und sodann zur Transfergruppe weitergeleitet über die Verbindungsleitung 404.

Die aus dem Puffer der Bilderfassungsgruppe B ausgelesenen Daten werden über ein serielles Protokoll (IEEE-1394, "FireWire" oder USB, "Universal Serial Bus") an einen Steuerrechner transferiert, bei dem es sich um einen PC handeln kann. Über diese Schnittstelle können auch die zur Bedienung der Kamera notwendigen Benutzerbefehle wie Aufnahme!, Testbild!, Belichtung! oder andere Befehle empfangen werden.

Die Steuergruppe S bewirkt die Bearbeitung der vom Benutzer ausgesandten Befehle, indem sie die zeitliche Abfolge der Aktionen von Antriebs-, Bilderfassungs- und Steuergruppe koordiniert. Beispielsweise wird für die vollständige Aufnahme eines vollständigen Panoramas die Erfassungsgruppe zunächst mit der Antriebsgruppe so lange verfahren, bis die Null-Position erreicht ist. Anschließend wird die Bilderfassungsgruppe um die vertikale Achse rotiert. Die vom Impulsgeber kommenden Signale werden zur Bestimmung der exakten Zeitpunkte für die sequentielle Aufzeichnung einer einzelnen Farbspalte des Panoramas genutzt. Die Aneinanderreihung der so erzeugten Spalteninformationen führt bei geeigneter Parameterwahl zu einem "dichten" Farbpanorama ohne Farbfehler.

Neben der korrekten Farberfassung in eine Raumrichtung spielt die Vollständigkeit der Abtastung des realen Panoramas eine Rolle: physikalische Abtastlücken wie sie im Falle des monolinearen RGBRGBRGB-Sensors in vertikaler Richtung auftreten, können bei bekanntem Drehwinkel nahezu vollständig vermieden werden, indem die Aufnahmen entsprechend dicht nebeneinander liegen.

Weiterhin ist auch eine richtungsvariable Belichtungszeit realisierbar.

Durch die von der Antriebsguppe realisierte (zeitvariable) Ausrichtung der Bilderfassungsgruppe, die Verrechnung des bestimmten Ausrichtungswinkels ϕs während der Abtastung, die Berechnung der Startzeitpunkte für die Belichtung der Farbreihen und die Dauer der Belichtung der Farbreihen wird bei weiterhin gegebener "Winkel-Helligkeit" des realen Panoramas, die beispielsweise mit einer Testbelichtung erfaßt werden kann, bei gegebener Anzahl der Spalten des Abbildes und bei gegebener Blendenstellung des Objektives zum einen der Farbfehler vermieden.

Weiterhin ist es möglich, das Panorama nahezu vollständig ("dicht") abzutasten sowie weiterhin eine richtungsvariable Belichtungszeit zu realisieren. Dazu wird zunächst mittels eines Testbildes die Richtungshelligkeit erfaßt und bei der nachfolgenden Aufnahme entsprechend berücksichtigt. Dazu muß die absolute Winkelposition bekannt sein.

Es ist weiterhin vorteilhaft möglich, durch die geeignete Montage von zwei Aufnahmevorrichtungen auf einer Antriebseinheit eine dem Drehen des menschlichen Kopfes nachempfundene Bewegung zu realisieren.

Durch eine geeignete Synchronisation des Auslesens der beiden Sensoren in den zwei Bilderfassungsgruppen und der geeigneten Zuordnung zu einem einzigen Drehwinkel können zwei der menschlichen Wahrnehmung (in diesem Raumwinkel) entsprechende senkrechte Streifen (Ausschnitte zweier Panoramen) aufgezeichnet werden.

Werden diese Streifen mit der bekannten Winkelinformation zu zwei farbkorrekten und dichten Panoramen zusammengefügt und korrespondierende Ausschnitte der beiden Panoramen zum entsprechenden Auge eines Menschen "übertragen", so kommt es zu einer dreidimensionalen Farbwahrnehmung des Panoramas.

Als Ausführungsbeispiel der Übertragungsform der beiden Ausschnitte des Panoramas in die Augen des Betrachters kommen zur Zeit verschiedene Techniken in Betracht:
- Shutterbrillen und alternierende Fernsehbilder,
- Polarisationsbrillen und Laserfernsehen mit Drehung der Polarisationsebene nach jedem Halbbild
- zwei LCD-Miniaturbildschirme, die vor die beiden Augen gehalten werden.

Durch ein aktives Anmessen des Dreh- und Kippwinkels des Kopfes des Betrachters kann ein dieser bestimmten Raumrichtung entsprechender Ausschnitt der Stereo-Panoramas ermittelt und dem Betrachter mit einem der geeigneten Verfahren (beispielsweise dem Verfahren mit den zwei LCD-Miniaturbildschirmen) dargeboten werden. Es entsteht so bei dem Betrachter der Eindruck, daß er sich dreidimensional in einem Raum umsehen kann.

## Patentansprüche

1. Vorrichtung zur Farbaufnahme eines Bildes, bei der zur Aufnahme des Bildes ein Sensor vorgesehen ist, der um wenigstens eine Achse drehbar ist und der eine Fläche von Pixeln aufweist, wobei die Farbaufnahme realisierbar ist, indem Pixel eine unterschiedliche spektrale Empfindlichkeit (RGB) aufweisen,
dadurch gekennzeichnet, daß benachbarte Pixel in einer Drehrichtung eine unterschiedliche spektrale Empfindlichkeit aufweisen (302, RGB) und daß der Sensor zwischen zwei einander zugeordneten Einzelaufnahmen um einen solchen Winkel verdrehbar ist, der dem Abstand benachbarter Pixel (RGB) mit unterschiedlicher spektraler Empfindlichkeit entspricht.

2. Vorrichtung nach Anspruch 1,
dadurch gekennzeichnet, daß die Pixel in einer Orientierung der Fläche dichter nebeneinander liegen als in einer anderen Orientierung der Fläche und daß die in der anderen Orientierung der Fläche weniger dicht nebeneinander liegenden Pixel eine unterschiedliche spektrale Empfindlichkeit (RGB) aufweisen.

3. Vorrichtung nach einem der Ansprüche 1 oder 2,
dadurch gekennzeichnet, daß der Sensor zwischen den einander zugeordneten Einzelaufnahmen um Winkel verdrehbar ist, die kleiner sind als der Winkel, der dem Abstand benachbarter Pixel (RGB) mit unterschiedlicher spektraler Empfindlichkeit entspricht.

4. Verfahren zur Farbaufnahme eines Bildes, bei dem zur Aufnahme des Bildes ein Sensor vorgesehen ist, der eine Fläche von Pixeln aufweist, wobei Pixel eine unterschiedliche spektrale Empfindlichkeit (RGB) aufweisen, wobei der Sensor zur Aufnahme des Bildes um wenigstens eine Achse gedreht wird,
dadurch gekennzeichnet, daß die in Drehrichtung des Sensors nebeneinander liegenden Pixel (302) eine unterschiedliche spektrale Empfindlichkeit (RGB) aufweisen und daß die Aufnahme eines Bildpunktes des Bildes erfolgt, indem die Farbinformation dieses Bildpunktes aus den nacheinander aufgenommenen Farbinformationen von Pixeln unterschiedlicher spektraler Empfindlichkeit (RGB) zusammengesetzt wird, indem zwischen zwei einander zugeordneten Einzelaufnahmen der Sensor um einen dem Abstand zwischen zwei benachbarten Pixeln (RGB) unterschiedlicher spektraler Empfindlichkeit entsprechenden Betrag weitergedreht wird, wobei aus den nacheinander aufgenommenen Farbinformationen benachbarter Pixel mit spektral unterschiedlicher Empfindlichkeit die jeweils einem Bildpunkt (303) entsprechende Bildinformation gewonnen wird.

5. Verfahren nach Anspruch 4,
dadurch gekennzeichnet, daß der Sensor aus drei Reihen von Pixeln besteht, wobei die Pixel in einer Reihe dieselbe spektrale Empfindlichkeit aufweisen, wobei die Pixel benachbarter Reihen (201, 202, 203) jeweils eine unterschiedliche spektrale Empfindlichkeit (RGB) aufweisen.

6. Verfahren nach Anspruch 5,
dadurch gekennzeichnet, daß der Sensor zwischen zwei einander zugeordneten Einzelaufnahmen um solche Winkel verdreht wird, die kleiner sind als dies dem Abstand benachbarter Pixel unterschiedlicher spektraler Empfindlichkeit (RGB) entspricht.

7. Verfahren nach einem der Ansprüche 4 bis 6,
dadurch gekennzeichnet, daß mittels benachbarter Aufnahmevorrichtungen, die durch eine Antriebseinheit angetrieben werden, jeweils ein Panoramabild erzeugt wird, wobei für eine dreidimensionale Reproduktion des Panoramabildes die Panoramabilder einer Wiedergabevorrichtung zugeführt werden.
